(19) Europäisches Patentamt

European Patent Office

Office européen des brevets

(11) **EP 1 780 089 B1**

(12) **EUROPEAN PATENT SPECIFICATION**

(45) Date of publication and mention
of the grant of the patent:
**08.09.2010 Bulletin 2010/36**

(51) Int Cl.:
**B60W 30/14** *(2006.01)* **B60W 50/08** *(2006.01)*

(21) Application number: **06022711.3**

(22) Date of filing: **31.10.2006**

(54) **Vehicle control system and vehicle control method**

Fahrzeugsteuerung

Commande pour un véhicule

(84) Designated Contracting States:
**DE FR GB**

(30) Priority: **01.11.2005 JP 2005318248**

(43) Date of publication of application:
**02.05.2007 Bulletin 2007/18**

(73) Proprietor: **AISIN AW CO., LTD.**
**Anjo-shi, Aichi 444-1192 (JP)**

(72) Inventors:
• **Miyajima, Takayuki**
**Okazaki-shi**
**Aichi 444-8564 (JP)**

• **Ogawa, Fumiharu**
**Okazaki-shi**
**Aichi 444-8564 (JP)**

(74) Representative: **Kramer - Barske - Schmidtchen**
**European Patent Attorneys**
**Landsberger Strasse 300**
**80687 München (DE)**

(56) References cited:
**DE-A1- 10 205 039     GB-A- 2 357 159**
**US-A- 6 052 644        US-A1- 2004 094 912**
**US-B1- 6 199 001       US-B1- 6 253 143**

EP 1 780 089 B1

**Description**

The present invention relates to a vehicle control system and a vehicle control method.

Conventionally, in a vehicle having a navigation apparatus mounted therein, a suspension control apparatus is provided for the vehicle that enables the carrying out of control of the suspension by responding to road condition data that is provided by the navigation apparatus (for example, refer to Japanese Patent Application Publication No. JP-A-2000-318634). In this case, it is determined whether or not there are level changes in the road based on a database, and the rigidity of the suspension is controlled accordingly.

However, in the conventional suspension control apparatus described above, because the suspension is softened when passing over level changes to improve the ride comfort, when the vehicle speed is high, it has not been possible to make the ride comfort sufficiently high. The vertical acceleration that occurs when the vehicle passes over a level change is determined by the size of the level change and the vehicle speed, and thus, for the same level change, the vertical acceleration becomes higher as the vehicle speed becomes higher. In addition, because there are limits to the range in which the rigidity of the suspension can be controlled, even when the suspension is made as soft as possible when the vehicle speed is high, it is not possible to absorb this vertical acceleration suitably, and the ride comfort deteriorates.

US-B1-6253143 relates to systems and methods for enhancing driver safety, in particular to avoid unsafe operating conditions during off-road operation, wherein no memory device is provided which stores level changes on a road.

US-B1-6199001 relates to a control device for a vehicle which controls the behaviour of the vehicle based on information regarding the route that the vehicle follows, wherein in case of a rough road condition, the suspension is changed and engine and transmission are not changed depending on a rough road. There is no link between rough road conditions and the vehicle speed.

In order to solve these conventional problems, it is an object of the present invention to provide a vehicle control system that, when passing over level changes, enables the improvement of the ride comfort even when the speed of the vehicle is high by decelerating before reaching the level changes by carrying out deceleration control when a characteristic value that represents the relationship between the speed and the vertical acceleration of the vehicle exceeds a critical value of comfort.

This object is solved with the features of claims 1 and 9.

Thus, the vehicle control system of the present invention includes a memory device that stores level change information about level changes in roads; a vehicle speed detecting device that detects the speed of the vehicle; and a vehicle speed control device that calculates a characteristic value that represents the relationship between the speed and the vertical acceleration of the vehicle based on the speed of the vehicle that has been detected by the vehicle speed detecting device and the level change information, and carries out deceleration control when the calculated characteristic value exceeds a critical value of comfort.

According to the present invention, when the characteristic value that indicates the relationship between the speed and the vertical acceleration of the vehicle will exceed a critical value when passing over a level change, deceleration control is carried out. Thereby, even in the case in which the speed of the vehicle is high, it is possible to improve the ride comfort by decelerating before reaching the level change.

FIG. 1 is a drawing showing an operation in an embodiment of the present invention by which level changes are learned.

FIG. 2 is a block diagram showing a configuration of the vehicle control system in the embodiment of the present invention.

FIG. 3 is a flowchart showing an operation in the embodiment of the present invention by which level changes are learned.

FIG. 4 is a drawing showing an operation in the embodiment of the present invention in which the preferences of the driver are learned.

FIG. 5 is a drawing showing a method in the embodiment of the present invention by which the comfort demarcation line is set based on the learned preferences of the driver.

FIG. 6 is a drawing for explaining the meaning of the comfort demarcation line in the embodiment of the present invention.

FIG. 7 is a first drawing for explaining a method of suspension control in the embodiment of the present invention.

FIG. 8 is a second drawing for explaining a method of suspension control in the embodiment of the present invention.

FIG. 9 is a third drawing for explaining a method of suspension control in the embodiment of the present invention.

FIG. 10 is a fourth drawing for explaining a method of suspension control in the embodiment of the present invention.

FIG. 11 is a drawing showing an operation in the embodiment of the present invention by which the vehicle is decelerated before reaching a level change.

FIG. 12 is a drawing showing a method of calculating the necessary deceleration in the embodiment of the present invention.

FIG. 13 is a drawing showing a map for determining the target revolution number of the automatic transmission in the embodiment of the present invention.

FIG. 14 is a flowchart showing a control operation for the vehicle control system in the embodiment of the present invention.

Below, the embodiment of the present invention will be explained in detail with reference to the figures.

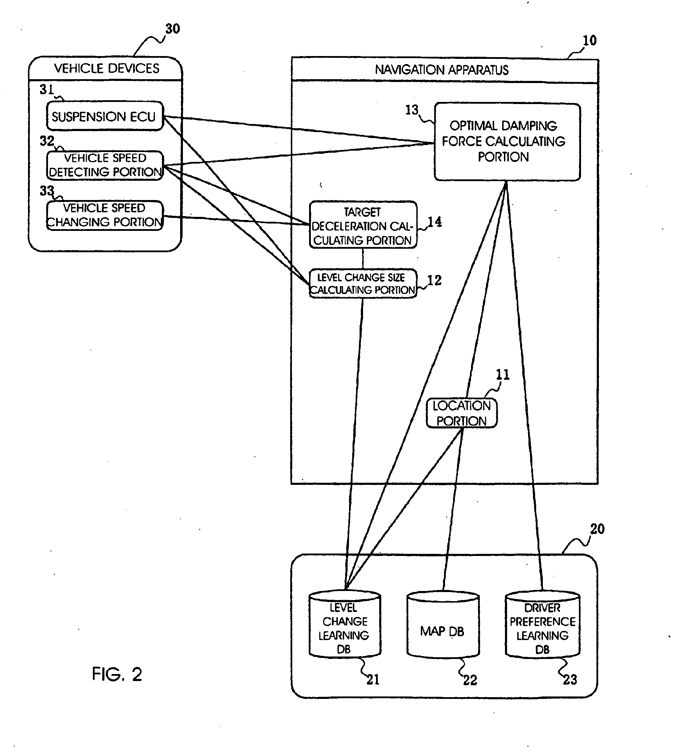

FIG. 2 is a block diagram showing a configuration of the vehicle control system in the embodiment of the present invention.

As is shown in the figure, the vehicle control system in the present embodiment includes a navigation apparatus 10 that outputs travel environment information of the vehicle as road information, a database unit 20 that stores various types of data, and a vehicle device 30 that is mounted in the vehicle and that detects and controls the state of the vehicle. Note that the database unit 20 may be integrated into the navigation apparatus 10. Here, the vehicle may be any of several types that are capable of traveling on a road, such as a passenger car, a truck, a bus, a two-wheeled vehicle and the like. However, in the present embodiment, for the convenience of explanation, the case in which the vehicle is a passenger car that is provided with four wheels will be explained. In addition, each wheel is equipped with an independent suspension (suspension system).

Here, the vehicle device 30 includes a suspension ECU (Electronic Control Unit) 31, a vehicle speed detecting portion 32 that serves as a vehicle speed detecting device, and a vehicle speed changing portion 33. The suspension ECU 31 is an apparatus that controls the characteristics of the suspension, and it is provided with a processing device such as CPU, MPU, or the like, a memory device such as semiconductor memory, a magnetic disc or the like, a communication interface, and the like. The suspension ECU 31 connects, for example, so as to be able to communicate with the navigation apparatus 10 via a communication network such as an in-vehicle LAN (Local Area Network) or the like that serves as a vehicle body communication network that is wired into the vehicle. Note that any characteristic of the suspension may be controlled by the suspension ECU 31. For example, the value of the spring rate (or spring constant) of a spring member may be controlled. However, here the case will be explained in which the damping force, which serves as a characteristic of the suspension, is controlled. In addition, while the control of the damping force may be carried out by any method, here, an actuator that is built into the oil pressure damper of each suspension may be activated to change the size of the diameter of an orifice in the oil flow channel by rotating an orifice switching-type variable damping valve.

In addition, a vertical acceleration sensor that detects the vertical acceleration of the vehicle is connected to the suspension ECU 31. Vertical acceleration is an acceleration in which the upper portion of the spring moves in a vertical direction, the upper portion of the spring being the part of the suspension on the vehicle side. Based on a detection signal from the vertical acceleration sensor, it is possible to detect that the vehicle is traveling over a level change.

Furthermore, the vehicle speed detecting portion 32 is provided with a vehicle speed sensor, and the speed of the vehicle, that is, the vehicle speed, is thereby detected. The vehicle speed detecting portion 32, like the suspension ECU 31, is connected so as to be able to communicate with the navigation apparatus 10.

In addition, the vehicle speed changing portion 33 includes an automatic transmission control apparatus that controls the automatic transmission that serves as a driving force adjusting apparatus, which adjusts the driving force of the vehicle. The vehicle speed is changed by controlling the automatic transmission. In addition, this automatic transmission is an apparatus that transmits the revolutions of the vehicle engine to the axles by controlling the gear ratio, and may be a stepped automatic transmission that is provided with speeds in which the gear ratio is changed stepwise. However, the present embodiment will be explained by using an automatic transmission that has a step-less transmission in which the gear ratio is changed continuously. Note that the vehicle speed changing portion 33, like the suspension ECU 31 and the vehicle speed detecting portion 32, is connected so as to be able to communicate with the navigation apparatus 10.

In addition, the navigation apparatus 10 is provided with a processing device such as a CPU, MPU, or the like, a memory device such as semiconductor memory, a magnetic disc or the like, a display device such as a CRT, liquid crystal display, LED (Light Emitting Diode) display, a laser hologram, or the like, an input device such as a touch panel, remote control, push button switches or the like, an audio output device such as a loudspeaker or the like, an audio input device such as a microphone or the like, and a communication interface and the like. Furthermore, the navigation apparatus 10 is provided with a GPS (Global Positioning System) sensor, a gyroscopic sensor, or a G sensor or the like, and based on the signals from these sensors and the signals from the vehicle speed detecting portion 32, the current position of the vehicle, the vehicle orientation, the vehicle speed, the distance that the vehicle has moved and the like, can be detected. Note that the navigation apparatus 10 may be provided, for example, with a steering sensor that detects the steering angle of the vehicle that is operated by the driver, a turn signal sensor that detects the operation of turn signals that serve as direction indicators for the vehicle, an accelerator sensor that detects the angle of the accelerator pedal that is operated by the driver, a brake sensor that detects the movement of the vehicle brake pedal that is operated by the driver, a vehicle weight sensor that acquires weight data of the vehicle, a geomagnetism sensor, a distance sensor, a beacon sensor, and an altimeter or the like.

The GPS sensor detects the current location on the earth by receiving radio waves that are transmitted by GPS satellites (not illustrated), the geomagnetism sensor detects the vehicle orientation by measuring geomagnetism, and the distance sensor detects the distance and the like between predetermined positions on the road. In addition, the beacon sensor detects the current location by receiving position information from beacons that are installed along the road.

In addition, the database unit 20 includes a level change learning database 21, a map database 22, and a driver preference learning database 23, and is connected so as to be able to communicate with the navigation apparatus 10. Note that the level change learning database 21, the map database 22, and the driver preference learning database 23 may be stored in a memory device that is built into the navigation apparatus 10.

In addition, the map database 22 includes a map data file, an intersection data file, a node data file, a road data file, and a facility data file that stores information about facilities such as hotels, gas stations and the like in each region. The intersection data file stores intersection data, the node data file stores node data, and the road data file stores road data. The road condition is displayed on the screen of the display device by using the intersection data, node data, and road data. Note that the intersection data includes the types of intersection, that is, whether the intersection is equipped with traffic signal lights or whether the intersection is not equipped with traffic signal lights. In addition, the node data configures at least the location and shape of roads in the map data that is stored in the map data file, and includes data that shows actual junctions in the road (including intersections, T-junctions, and the like), node points, and links that connect each of the node points. Furthermore, the node points indicate at least the locations of curves in a road.

In addition, the road data includes, about the road itself, data about the width, slope, cant, elevation, banking, road surface conditions, the number of lanes, the points where the number of lanes decreases, points where the width narrows, and the like. Note that in the case of expressways and arterials, each of the opposing traffic lanes is stored as separate road data, and are processed as a double road. For example, in the case of an arterial having two or more lanes on each side, the arterial is processed as two roads, with the inbound lanes and the outbound lanes each stored in the road data as a double road. In addition, data is included about corners, such as the radius of curvature, intersections, T-junctions, corner entrances, and the like. Furthermore, the data is included about road attributes, such as railroad crossings, expressway entrance ramps, tollbooths for expressways, downhill roads, uphill roads, and the road type (national highway, major regional road, general-use road, expressway, and the like).

Additionally, the level change learning database 21 stores level change information such as the location of the learned level changes, the size of the level changes, and the like. In addition, the driver preference learning database 23 stores the preferences of the driver that is the user of the navigation apparatus 10, the data being obtained when the level changes have been learned. These preferences relate to whether any discomfort was felt when passing over level changes.

Note that in terms of functionality, the navigation apparatus 10 includes a location portion 11, a level change size calculating portion 12, an optimal damping force calculating portion 13, and a target deceleration calculating portion 14. The location portion 11 detects the current location of the vehicle by referring to the map database 22 based on the signals from a GPS sensor, a gyroscope sensor, a G sensor, the vehicle speed detecting sensor 32 or the like. In addition, the level change size calculating portion 12 calculates the size of a level change as the magnitude of the level change based on the speed that is detected by the vehicle speed detecting portion 32 when passing over the level changes and the vertical acceleration of the vehicle that is detected by the vertical acceleration sensor. Furthermore, the optimal damping force calculating portion 13 calculates the optimal damping force of the suspension for passing over a level change when the vehicle is approaching a level change that has been learned in advance. In addition, the suspension ECU 31 controls the damping force of the suspension based on the damping force that has been calculated by the optimal damping force calculating portion 13. In addition, the target deceleration calculating portion 14 calculates the target deceleration, which is the deceleration that is necessary to attain the recommended vehicle speed before reaching a level change when the vehicle speed is higher than the recommended speed for the vehicle to pass over the level change. In addition, the vehicle speed changing portion 33 controls the gear ratio of the automatic transmission so as to attain the target deceleration that has been calculated by the target deceleration calculating portion 14.

In addition, like the typical automobile navigation apparatus, the navigation apparatus 10 performs basic processes such as searching for a route to a destination, in-route travel guidance, determining special sections, and searching for sites, facilities, and the like. The navigation apparatus 10 also displays maps on the screen of a display device and displays the current location of the vehicle on the map, the route from the current location to the destination, and guidance information along the route. Note that the guidance information may also be output by audio using an audio device.

In the present embodiment, in terms of functionality, the vehicle control system includes a level change detecting device, a memory device, a level change control device, and a vehicle speed control device. The level change detecting device detects level changes in the road and includes such functions as a vertical acceleration sensor, a level change size calculating portion 12, and the like. In addition, the memory device stores the level change information about level changes that have been detected by the level change detecting device, and includes such functions as the level change learning database 21 and the like. Furthermore, the level change control device carries out level change control based on the level change information about level changes that is stored in the memory device, and includes such functions as the optimal damping force calculating portion 13, and suspension ECU 31, and the like. Furthermore, the vehicle speed control device carries out deceleration control by changing the gear ratio of the automatic transmission, and includes such functions as the target deceleration calculating portion 14, the vehicle speed detecting portion 32, the vehicle speed changing portion 33, and the like.

Next, the operation of the vehicle control system having the configuration described above will be explained. First, the operation by which level changes are learned will be explained.

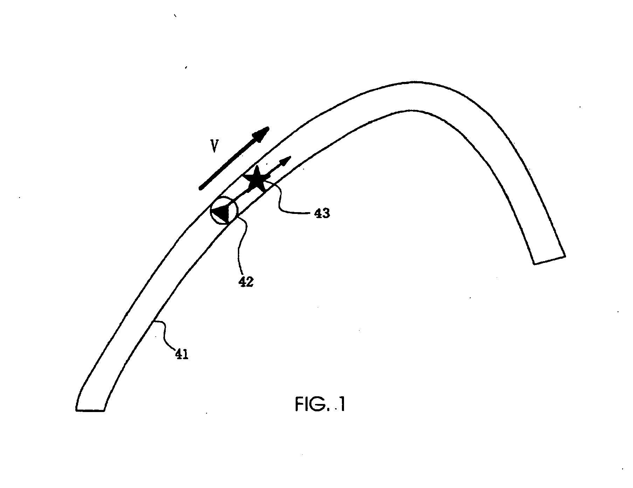

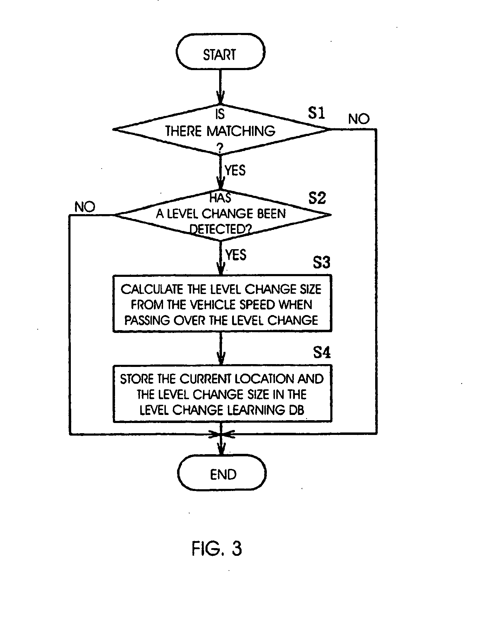

FIG. 1 is a drawing showing the operation in the embodiment of the present invention by which level changes are learned, and FIG. 3 is a flowchart showing the operation in the embodiment of the present invention by which the level changes are learned.

When the vehicle travels over a level change on the road, it is possible to improve the ride comfort by changing the characteristics of the suspension to a soft setting, that is, a yielding setting by, for example, reducing the damping force. However, because there is not enough time to change the characteristics of the suspension from the time that a level change is detected, it has not been possible to obtain a sufficient effect. Thus, in order to obtain a sufficient effect, it is necessary to change the characteristics of the suspension to a yielding setting beforehand. Additionally, storing level change information in advance in the map database 22 and determining that there is a level change within a predetermined distance range in the forward direction of the vehicle based on this level change information and the current location of the vehicle may be considered in order to change the characteristics of the suspension in advance. However, creating the map data files and road data files that store the level change information related to all of the level changes in a road is expensive, and because the memory capacity necessary for storing the files is enormous, this is in practice very difficult. In addition, detecting level changes within a predetermined distance range in the forward direction of the vehicle by an image-pickup apparatus such as a camera or a radar apparatus such as a millimeter wave radar attached to the vehicle may be considered, but the cost of detecting level changes with high precision is high.

Thus, in the embodiment of the present invention, when the navigation apparatus 10 detects the presence of a level change and the size of the level change based on the vertical acceleration of the vehicle that has been detected by the vertical acceleration sensor and the vehicle speed that has been detected by the vehicle speed detecting portion 32, the level change information about the detected level change is stored in the level change learning database 21. Note that level change information is information related to a level change that includes the location of the level change, the size of the level change, and the like.

FIG. 1 shows an operation by which level changes are learned. In the figure, reference numeral 41 denotes a road outline, which indicates the shape of the road, reference numeral 42 denotes a current location mark, which indicates the current location of the vehicle, reference numeral 43 denotes a level change mark, which indicates the location of the level change, and V denotes the vehicle speed. First the navigation apparatus 10 determines whether or not there is map matching. In this case, the location portion 11 compares the current location of the vehicle that has been detected based on signals from a GPS sensor, a gyroscopic sensor, a G sensor, the vehicle speed detecting portion 32 or the like, with the map data stored in the map database 22, and carries out map matching. Next, when the detected current location of the vehicle is not on a road in the map data, it is determined that there is no matching and the processing ends.

Additionally, because it is determined that there has been matching when the detected current location of the vehicle is on a road in the map data, the navigation apparatus 10 determines whether or not a level change has been detected. In this case, as shown in FIG. 1, it is determined whether or not the vehicle has passed over a level change while traveling along the road. In addition, it is determined that the vehicle is passing over a level change when the high frequency component of the vertical acceleration of the vehicle that has been detected by the vertical acceleration sensor becomes equal to or greater than a predetermined threshold value. Additionally, when the high frequency component of the vertical acceleration is less than a predetermined threshold value, it is determined that the vehicle has not passed over a level change. That is, it is determined that no level change has been detected, and the processing ends.

In contrast, when the high frequency component of the vertical acceleration is equal to or greater than a predetermined threshold, the navigation apparatus 10 determines that the vehicle has passed over a level change, that is, it determines that a level change has been detected, and the level change size calculating portion 12 calculates the size of the level change from the vehicle speed V and the damping force of the suspension when the vehicle passed over the level change. Note that the level change size can be calculated based on the vehicle speed V and the detected vertical acceleration when the vehicle passes over the level change according to the relationship between the level change size found in advance, the damping force of the suspension, the vehicle speed, and the vertical acceleration.

Next, the navigation apparatus 10 stores the current location and the level change size in the level change learning database 21, and ends the processing. In this case, the current location when the level change was detected is stored as the level change location, along with the level change size that has been calculated by the level change size calculating portion 12. Specifically, the coordinates of the location where the level change is present and the size of the level change are associated, and they are stored in the level change learning database 21. The level change that the vehicle has passed over is thereby learned.

Note that the processing described above is repeatedly executed at a predetermined timing of, for example, once every 10 msec. Thus, the location and size of each level change that the vehicle has passed over while traveling are stored in sequence and are accumulated.

Next, the flowchart will be explained.

Step S1: It is determined whether or not there is matching. When there is matching, the processing proceeds to step S2, and when there is no matching, the processing ends.

Step S2: It is determined whether or not a level change has been detected. When a level change has been detected, the processing proceeds to step S3, and when a level change has not been detected, the processing ends.

Step S3, the size of the level change is calculated from the vehicle speed when the level change was passed over.

Step S4, the current location and the size of the level change are stored in the level change learning database 21, and the processing ends.

Note that the level change information that is stored in the level change learning database 21 does not necessarily have to be acquired based on learning by the vehicle, and may be acquired from a database that has been created in advance or the like.

Next, the operation in which the comfort demarcation line is set will be explained.

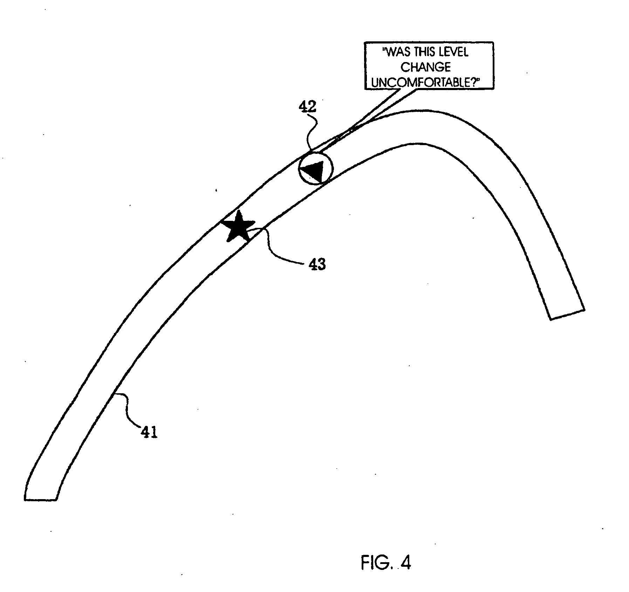

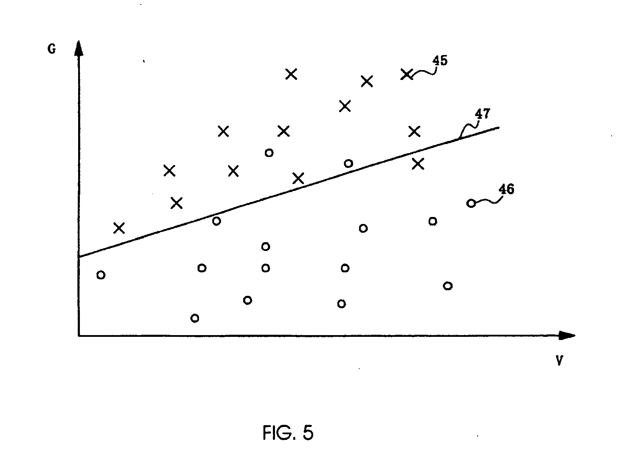

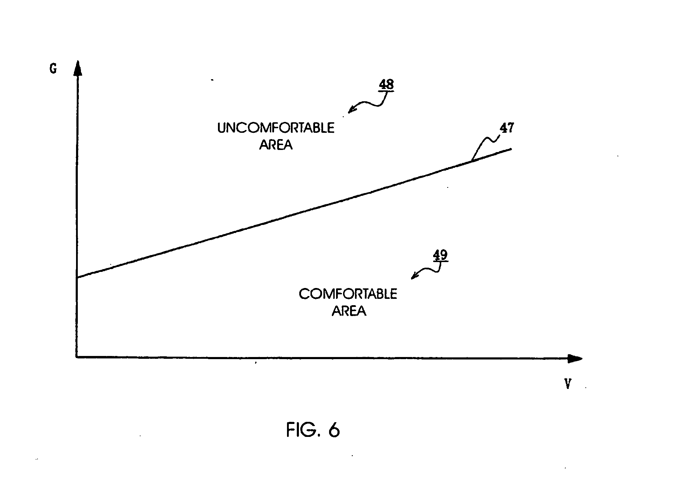

FIG. 4 is a drawing that shows the operation in the embodiment of the present invention by which the preferences of the driver are learned, FIG. 5 is a drawing that shows the method in the embodiment of the present invention by which the comfort demarcation line is set based on the preferences of the driver that have been learned, and FIG. 6 is a drawing for explaining the meaning of the comfort demarcation line in the embodiment of the present invention.

Drivers as users differ in whether or not the thrust they experience when their vehicle passes over a level change can be tolerated. For example, one driver may feel discomfort even when this thrust is weak and thereby feel that the ride comfort is low, whereas another driver may not feel discomfort even when this thrust is strong and thereby feel that the ride comfort is good. In addition, whether or not the thrust can be tolerated may be different even for the same driver depending on the vehicle speed. Generally, it is considered that when the vehicle speed is low, a driver may feel discomfort even when the thrust is weak, whereas when the vehicle speed is high, a driver may not feel discomfort even when the thrust is strong. Thus, in the present embodiment, the preferences of the driver concerning this thrust are learned.

When the navigation apparatus 10 determines that a level change has been detected, as shown in FIG. 4, immediately after the vehicle has passed over the level change, the driver is asked about the thrust. For example, the question "Was this level change uncomfortable?" is displayed on the screen of the display device, and audio is output from an audio output device. In addition, the driver inputs either the response "Uncomfortable" or "Not uncomfortable" by operating an input device such as a touch panel. In addition, the navigation apparatus 10 stores the response of the driver concerning the level change that the vehicle passed over in the driver preference learning database 23, along with the vehicle speed and the vertical acceleration that were detected while passing over the level change. Thereby, the preference of the driver with respect to the thrust from a level change that the vehicle passed over is learned.

In addition, when a predetermined number of responses or greater from the driver have been accumulated, the comfort demarcation line that indicates a critical value for the comfort of the driver is set based on the number of accumulated responses of the driver. In this case, as shown in FIG. 5, based on the vehicle speed and the vertical acceleration that have been stored along with the responses, the accumulated responses of the driver are developed into a V-G map, in which the horizontal axis represents the vehicle speed V and the vertical axis represents the vertical acceleration G In FIG. 5, point 45, which is shown by an "x" indicates the response "uncomfortable", and point 46, which is shown by an "o", indicates the response "not uncomfortable". In addition, a line 47 that divides the region in which the point 45 is present and the region in which point 46 is present is set, and this line 47 serves as the comfort demarcation line. Note that the comfort demarcation line 47 need not necessarily be a straight line, and it may be a curved line. However, in the present embodiment, for the convenience of explanation, the comfort demarcation line 47 will be explained by using a straight line. In addition, the comfort demarcation line 47 is not set for every level change, and does not depend on the level changes, that is, the comfort demarcation line 47 is not set in relation to the level changes.

As shown in FIG. 6, the comfort demarcation line 47 is the line that divides the comfort area 49 and the discomfort area 48. The comfort area 49 is the area in which a driver feels discomfort due to the thrust when passing over a level change, that is, the driver feels that the ride comfort is good and comfortable. The discomfort area 48 is the area in which a driver feels no discomfort due to the thrust when passing over a level change, that is, the driver feels that the ride comfort is inferior and uncomfortable. In other words, the comfort demarcation line 47 is the line that indicates the upper limiting value, that is, the critical value of comfort, of the vertical acceleration that the driver can feel as being comfortable. Thus, it is understood that if control is carried out such that the position on the V-G map, which indicates the relationship between the vehicle speed and the vertical acceleration that have been detected when passing over a level change, remains within the comfort area 49, the driver will not feel discomfort due to the thrust when passing over a level change. In contrast, it is understood that when the position in the V-G map, which indicates the relationship between the vehicle speed and the vertical acceleration, exceeds the comfort demarcation line 47 to enter the uncomfortable area 48, the driver will feel discomfort due to the thrust when passing over a level change. Thus, in the present embodiment, suspension control is carried out by using this comfort demarcation line 47.

Note that the comfort demarcation line 47 used in the suspension control need not necessarily be set based on learning, but can use a comfort demarcation line 47 that has been set in advance. For example, it is possible to store in advance and use a comfort demarcation line 47 that has been set by causing a plurality of vehicles to pass over level changes, collecting the vehicle speed and vertical acceleration detected at that time along with the responses of drivers, and developing the plurality of collected responses into a V-G map. In this case, while the comfort demarcation line 47 does not reflect the preferences of particular drivers, it can be considered to reflect the average preferences of multiple drivers.

Next, the method of the suspension control will be explained.

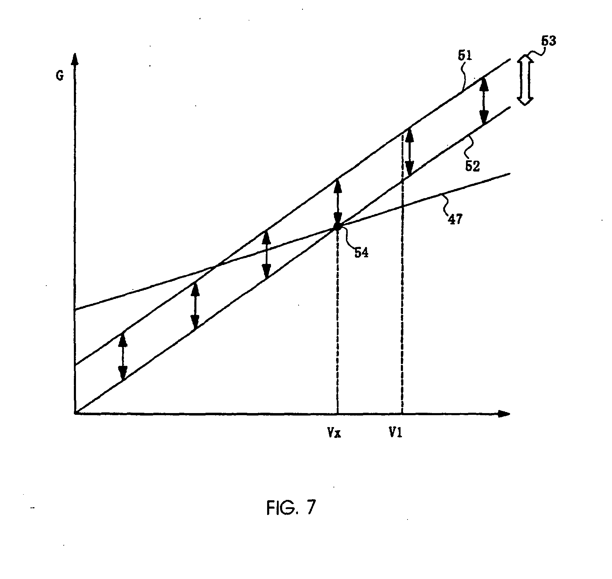

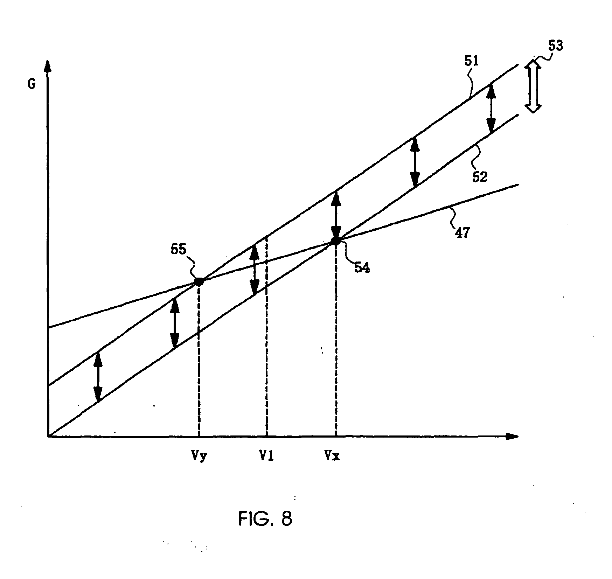

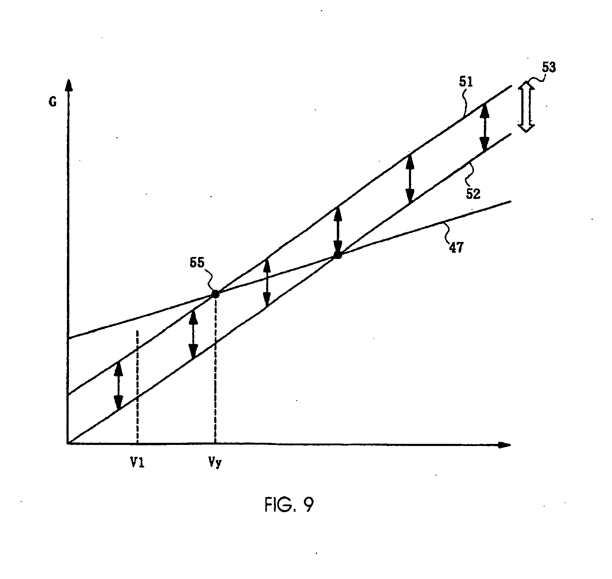

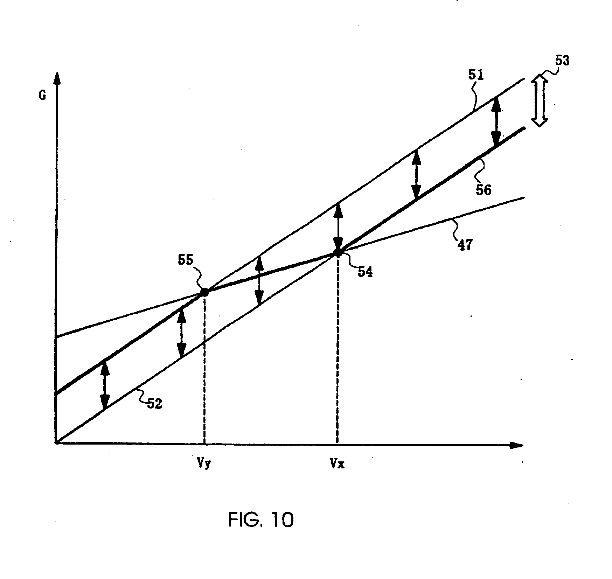

FIG. 7 is a first drawing for explaining a method of suspension control in the embodiment of the present invention; FIG. 8 is a second drawing for explaining a method of suspension control in the embodiment of the present invention; FIG. 9 is a third drawing for explaining a method of suspension control in the embodiment of the present invention; and FIG. 10 is a fourth drawing for explaining a method of suspension control in the embodiment of the present invention.

In the present embodiment, in the case in which a level change is present in the forward direction of the vehicle that is traveling on a road, the amount of control of the suspension is determined based on the vehicle speed V1 at a location immediately before reaching the level change and the size of the level change.

Here, the characteristic value that indicates the relationship between the vehicle speed V and the vertical acceleration G when the vehicle passes over a level change varies as shown by the straight lines 51 and 52 on the V-G map shown in FIG 7. Note that the straight line 51 corresponds to the upper limiting value of the variation band of this characteristic value, and indicates the case in which, when the amount of control of the suspension is set to the upper limiting value of this control band, the damping force of the suspension is highest, that is, indicates the case in which the suspension is set to be the most firm. In addition, the straight line 52 corresponds to the lower limiting value of the variation band of this characteristic value, and indicates the case in which, where the amount of control of the suspension is set to the lower limiting value of this control band, the damping force of the suspension is lowest, that is, indicates the case in which the suspension is set to be the most soft. In addition, the arrow 53 indicates the band within which the vertical acceleration can be varied by controlling the suspension, that is, indicates the variation band of the characteristic value, whose upper limiting value and lower limiting value are determined by the straight lines 51 and 52, and the control band for the amount of control of the suspension. In addition, reference numeral 54 denotes an intersection between the straight line 52 and the comfort demarcation line 47, where the vehicle speed corresponding to the intersection 54 is set to Vx. Note that the position and slope of the straight lines 51 and 52 on the V-G map differ depending on the size of the level change. In addition, the vehicle speed while passing over a level change is shown by V1.

In addition, as shown in FIG. 7, when V1 is equal to or greater than Vx, within the range equal to or greater than Vx, the line 52 is positioned above the comfort demarcation line 47, and thus it is understood that even if the suspension is set to its softest in order to make the ride comfort satisfactory, a vertical acceleration G having a value that corresponds to the uncomfortable area 48 will be generated. That is, when V1 is equal to or greater than Vx, even if the suspension is controlled, a vertical acceleration G that causes the driver to feel discomfort is generated. Thus, in order to decrease the degree to which the driver feels discomfort as much as possible, in the case in which V1 is equal to or greater than Vx, the suspension is set to its softest, and the relationship between the vehicle speed V and the vertical acceleration G is varied along the straight line 52.

In addition, as shown in FIG. 8, V1 is set so as to be greater than Vy and less than Vx. Note that Vy is the vehicle speed that corresponds to the intersection 55 between the straight line 51 and the comfort demarcation line 47. In this case, by controlling the suspension, it is possible to set the vertical acceleration G to the critical value of the comfort indicated by the comfort demarcation line 47. Note that while it is possible to set the vertical acceleration G lower than the comfort demarcation line 47 in order to make the ride comfort even better, it is desirable to set the suspension to be firm in order to increase the travel stability. Thus, in order to make ride comfort and travel stability compatible to a high degree, in the case in which V1 is greater than Vy and less than Vx, the suspension is controlled such that the relationship between the vehicle speed V and the vertical acceleration G is varied along the comfort demarcation line 47.

Furthermore, as shown in FIG. 9, when V1 is equal to or less than Vy, in the range equal to or less than Vy, the straight line 51 is positioned below the comfort demarcation line 47, and thus it is understood that even if the suspension is set to its firmest in order to make the travel stability high, a vertical acceleration G having a value corresponding to the comfortable area 49 is generated. That is, when V1 is equal to or less than Vy, even if the suspension is controlled, a vertical acceleration G that causes the driver to feel discomfort is not generated. Thus, in order to increase the travel stability as much as possible, in the case in which V1 is equal to or less than Vy, the suspension is set to its firmest, and the relationship between the vehicle speed V and the vertical acceleration G is varied along the straight line 51.

In order to make ride comfort and travel stability compatible, as shown in FIG. 10, it is desirable that the suspension be controlled such that the characteristic value that indicates the relationship between the vehicle speed V and the vertical acceleration G vary along the optimal control line 56, which is indicated by the bold line. This optimal control line 56 coincides with the straight line 51, which indicates when the suspension is set to its firmest, in a range equal to or less than Vy; coincides with the comfort demarcation line 47 in a range that is greater than Vy and less than Vx; and coincides with the straight line 52, which indicates when the suspension is set to its softest, in a range that is equal to or greater than Vx. Thus, within the range in which the suspension can be controlled, the optimal control line 56 is the line indicating a condition in which the characteristic value, which indicates the relationship between the vehicle speed V1 and the vertical acceleration G, is closest to the comfort demarcation line 47. In this manner, it is possible to optimize the ride comfort and the travel stability in line with the preferences of the driver by controlling the suspension such that the relationship between the vehicle speed V1 and the vertical acceleration G varies along the optimal control line 56, that is, the relationship between the vehicle speed V1 and the vertical acceleration G becomes close to the comfort demarcation line 47.

Next a method for controlling the vehicle speed will be explained.

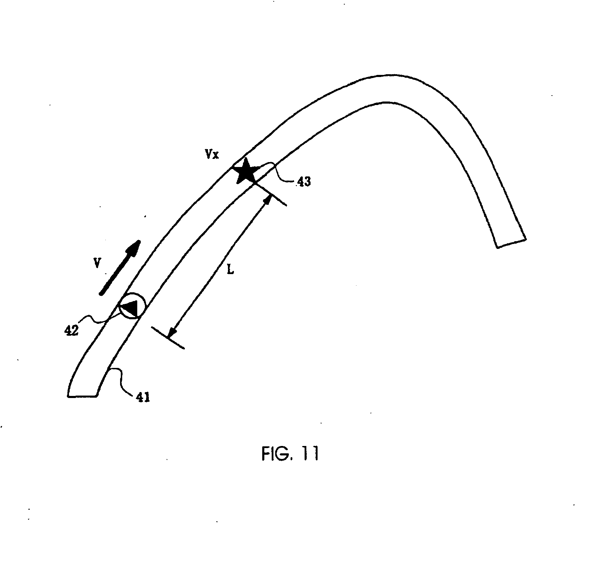

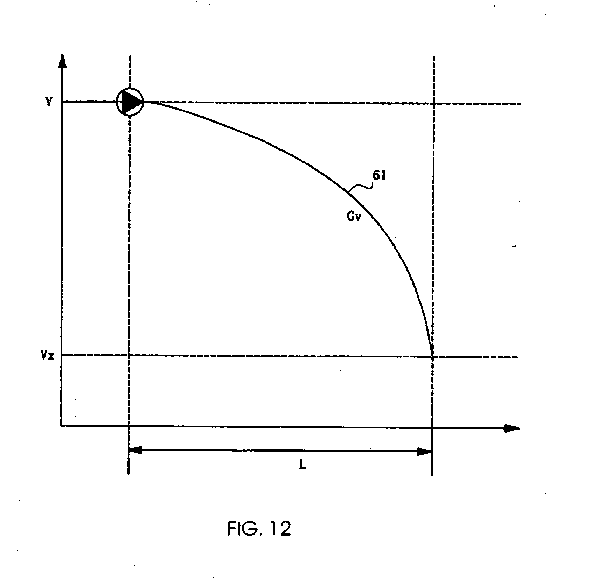

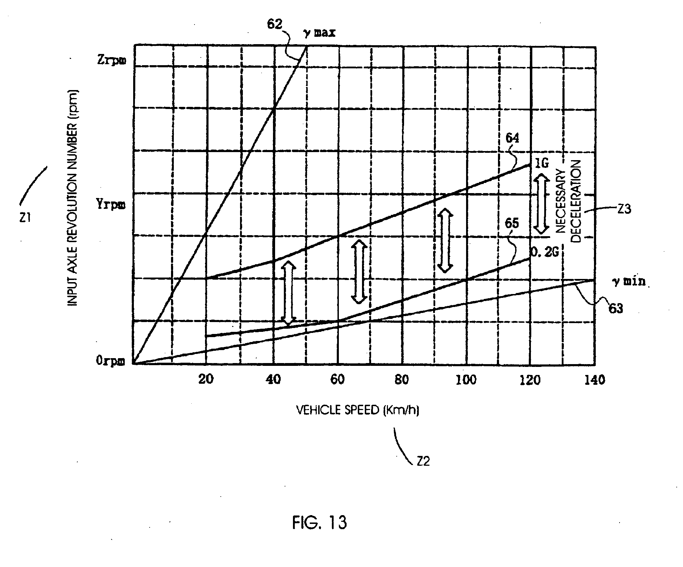

FIG. 11 is a figure showing an operation in the embodiment of the present invention by which the vehicle decelerates before a level change, FIG. 12 is a drawing showing a method in the embodiment of the present invention of calculating the necessary deceleration, and FIG. 13 is a figure showing a map in the embodiment of the present invention for determining the target revolution number of the automatic transmission.

As has been explained above, even if the suspension is controlled when the vehicle speed V is equal to or greater than Vx, a vertical acceleration G that causes the driver to feel discomfort is generated. Thus, in the present embodiment, when the vehicle speed V is equal to or greater than Vx, the vehicle speed is decreased so as to reach Vx by carrying out deceleration control by using engine braking.

As shown in FIG. 11, when the navigation apparatus 10 determines that there is a level change present in the forward direction of the vehicle and determines that the current vehicle speed V is equal to or greater than Vx with respect to the level change, deceleration control is carried out by setting Vx to a target vehicle speed. Note that the distance from the current location of the vehicle to the level change is denoted by "L".

In this case, the target deceleration calculating portion 14 calculates the necessary deceleration according to the following equation (1). Note that the necessary deceleration is denoted by "Gv".

$$Gv = (V^2 - Vx^2) / (2 \times L) \qquad \text{Equation (1)}$$

The calculated necessary deceleration Gv is shown by a curve 61 in FIG. 12. Note that FIG. 12 is a graph in which the horizontal axis represents the distance and the vertical axis represents the vehicle speed. The curve 61 in FIG. 12 shows the variation in the vehicle speed corresponding to the calculated necessary deceleration, and this means that as the curvature of the curve 61 becomes larger, that is, as the shape of the curve becomes tighter, the necessary deceleration becomes larger.

In addition, the vehicle speed changing portion 33 controls the automatic transmission according to the map shown in FIG. 13 such that the necessary deceleration calculated by the target deceleration calculating portion 14 is attained. Note that the automatic transmission in this explanation is a continuously variable transmission that uses pulleys and carries out shifting by changing the pulley ratio.

The map shown in FIG. 13 is a shifting map for an automatic transmission, and the horizontal axis represents the vehicle speed and the vertical axis represents the input axle revolution number. In addition, the straight line 62 indicates the relationship between the input axle revolution number of the automatic transmission and the vehicle speed when the gear ratio of the automatic transmission is set to its maximum. The straight line 63 indicates the relationship between the input axle revolution number of the automatic transmission and the vehicle speed when the gear ratio of the automatic transmission is set to its minimum. Note that the vehicle speed is proportional to the output axle revolution number of an automatic transmission.

In addition, the curved lines 64 and 65 are the shift curves that indicate the relationship between the target input axle revolution number of the automatic transmission, which corresponds to the necessary deceleration, and the vehicle speed. The curved line 64 corresponds to the case in which the necessary deceleration is 1(G) and the curved line 65 corresponds to the case in which the necessary deceleration is 0.2 (G). In addition, in the case in which the necessary deceleration is between 0.2(G) and 1(G), a value between the curved line 64 and the curved line 65 is selected. Thereby, a target input axle revolution number for the automatic transmission that corresponds to the necessary deceleration that has been calculated by the target deceleration calculating portion 14 is determined. In this case, it is understood that as the necessary deceleration becomes larger, the target input axle revolution number becomes higher. In addition, the gear ratio of the automatic transmission increases as the target input axle revolution number becomes higher, engine braking acts strongly when the accelerator is closed, and the vehicle thereby decelerates rapidly.

Thus, in the case in which the accelerator is closed, it is possible to determine that the driver intends to decelerate, and thus the vehicle speed changing portion 33 determines the target gear ratio such that the necessary deceleration that has been calculated by the target deceleration calculating portion 14 is thereby attained. This target gear ratio is calculated according to the following equation (2).

$$\text{(Target gear ratio)} = \text{(Target input axle revolution number)} / \text{(Output axle revolution number)} \qquad \text{Equation (2)}$$

Note that the output axle revolution number is proportional to the vehicle speed, and thus is found from the vehicle speed that is calculated by the vehicle speed detecting portion 32.

In addition, the vehicle speed changing portion 33 controls the pulley ratio of the automatic transmission such that the gear ratio matches the calculated target gear ratio.

Next, the operation by which the suspension and the automatic transmission are controlled while the vehicle is traveling will be explained.

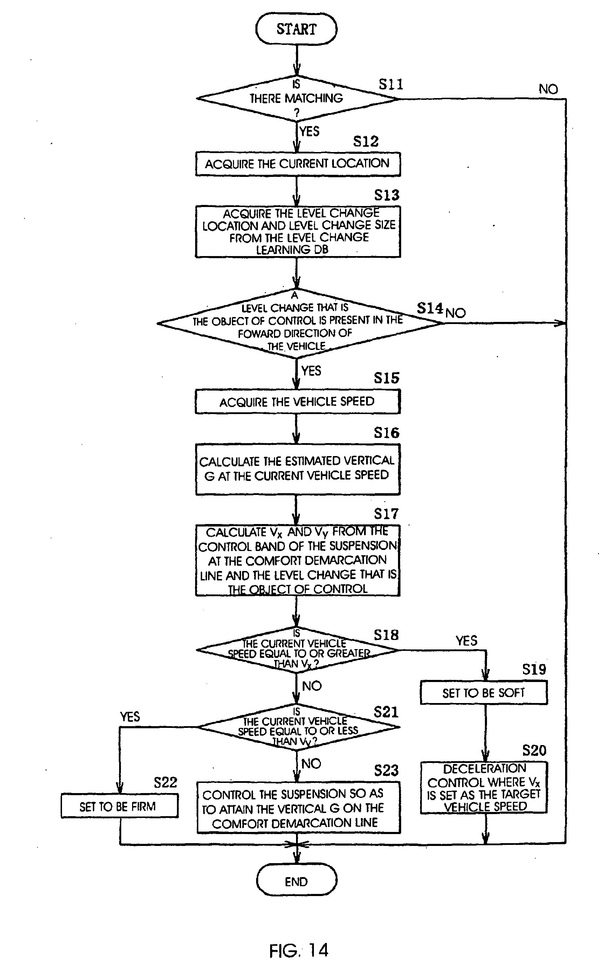

FIG. 14 is a flowchart showing the control operation of the vehicle control system in the embodiment of the present invention.

First, the navigation apparatus 10 determines whether there is matching. In this case, the location portion 11 compares the current location of the vehicle that has been detected based on signals from the GPS sensor, the gyroscopic sensor, the G sensor, the vehicle speed detecting portion 32 or the like, with the map data that is stored in the map database 22, and carries out map matching. In addition, when the detected current location of the vehicle is not on a road in the map data, it is determined that there is no matching and the processing is ended.

In contrast, in a case in which there is a level change, the navigation apparatus 10 calculates the estimated vertical acceleration that can be varied by controlling the suspension at the level change that is the object of control based on the size of the level change, and calculates Vx and Vy from the comfort demarcation line and the calculated estimated vertical acceleration. In this case, the control band for the suspension is obtained for the level change present in the forward direction of the vehicle. For this control band, the upper limiting value and the lower limiting value are determined by the straight lines 51 and 52 on the V-G map, as shown in FIG. 7 to FIG. 10. Then, the values of the vehicle speeds Vx and Vy, which correspond to the intersections 54 and 55 between the straight lines 51 and 52 and the comfort demarcation line 47 on the V-G map described above, are calculated.

Next, the navigation apparatus 10 determines whether or not the current vehicle speed is equal to or greater than Vx. Specifically, it is determined whether or not the estimated vertical acceleration at the current vehicle speed is larger than the vertical acceleration on the comfort demarcation line that corresponds to this current vehicle speed. In addition, when the current vehicle speed is equal to or greater than Vx, the suspension is set to be soft and the processing ends. In this case, the control band for the suspension is obtained at the level change that is present in the forward direction of the vehicle. The upper limiting value and the lower limiting value of this suspension control band are determined by the straight lines 51 and 52 on the V-G map, as shown in FIG. 7 to FIG. 10. Then the values of the vehicle speeds Vx and Vy, which correspond to the intersections 54 and 55 between the straight lines 51 and 52 and the comfort demarcation line 47 on the V-G map described above, are calculated.

Next, the navigation apparatus 10 determines whether or not the current vehicle speed is equal to or greater than Vx. In addition, in the case in which the current vehicle speed is equal to or greater than Vx, the suspension is set to be soft, deceleration control is carried out with Vx serving as the target vehicle speed, and the processing ends. In this case, the optimal damping force calculating portion 13 calculates the lowest damping force and sends the results to the suspension ECU 31. When this has been done, the suspension ECU 31 controls the suspension such that the damping force sent from the optimal damping force calculating portion 13 is attained. Thereby, the suspension is set to its softest. In addition, the target deceleration calculating portion 14 calculates the necessary deceleration according to Equation (1) described above and sends the results to the vehicle. speed changing portion 33. When this has been done, the vehicle speed changing portion 33 controls the pulley ratio of the automatic transmission such that the necessary deceleration that has been received from the target deceleration calculating portion 14 is attained. Thereby, because the vehicle speed has reached Vx when the vehicle passes over the level change, the driver feels no discomfort.

In addition, in the case in which the current vehicle speed is not equal to or greater than Vx, the navigation apparatus 10 determines whether or not the current vehicle speed is equal to or less than Vy. Then, in the case in which the current vehicle speed is equal to or less than Vy, the suspension is set to be firm and the processing ends. In this case, the optimal damping force calculating portion 13 calculates the highest damping force and sends the result to the suspension ECU 31. When this has been done, the suspension ECU 31 controls the suspension so as to attain the damping force that has been received from the optimal damping force calculating portion 13. Thereby, the suspension is set to its firmest.

Furthermore, in the case in which the current vehicle speed is not equal to or less than Vy, the suspension is controlled so as to attain a vertical acceleration on the comfort demarcation line, and the processing is ended. In this case, the optimal damping force calculating portion 13 calculates the damping force such that the value of the vertical acceleration attains the value indicated by the comfort demarcation line and sends the result to the suspension ECU 31. When this has been done, this suspension ECU 31 controls the suspension so as to attain the damping force that has been received from the optimal damping force calculating portion 13. Thereby, the suspension is controlled such that the relationship between the vehicle speed and the vertical acceleration is varied along the comfort demarcation line.

Note that the processing described above is repeatedly executed at a predetermined timing of, for example, once every 10 msec.

Next, the flowchart will be explained.

Step S11: It is determined whether or not there is matching. When there is matching, the processing proceeds to step S12, and when there is no matching, the processing ends.

Step S12: The current location is obtained.

Step S13: The level change locations and the level change sizes are obtained from the level change learning database 21.

Step S14: It is determined whether or not a level change is present in the forward direction of the vehicle that is an object of control. When there is a level change in the forward direction of the vehicle that is an object of control, the processing proceeds to step S 15, and when there is no level change present in the forward direction of the vehicle that is an object of control, the processing ends.

Step S 15: The vehicle speed is obtained.

Step S16: The estimated vertical acceleration G at the current vehicle speed is calculated.

Step S 17: Vx and Vy are calculated from the comfort demarcation line and the control band of the suspension at the level change that is the object of control.

Step S 18: It is determined whether or not the current vehicle speed is equal to or greater than Vx. When the current vehicle speed is equal to or greater than Vx, the processing proceeds to step S19, and when the current vehicle speed is not equal to or greater than Vx, the processing proceeds to step S21.

Step S 19: The suspension is set to be soft.

Step S20: Deceleration control is carried out with Vx serving as the target vehicle speed, and the processing ends.

Step S21: It is determined whether or not the current vehicle speed is equal to or less than Vy. When the current vehicle speed is equal to or less than Vy, the processing proceeds to step S22, and when the current vehicle speed is not equal to or less than Vy, the processing proceeds to step S23.

Step S22: The suspension is set to be firm, and the processing ends.

Step S23: The suspension is controlled so as to attain the vertical acceleration on the comfort demarcation line, and the processing ends.

In this manner, in the present embodiment, when the characteristic value that indicates the relationship between the speed and the vertical acceleration of the vehicle exceeds the comfort demarcation line that indicates the critical value of the comfort, that is, when the estimated vertical acceleration G at the current vehicle speed is larger than the vertical acceleration of the critical value that corresponds to the current vehicle speed, deceleration control is carried out. Specifically, in the case in which the vehicle speed is equal to or greater than Vx, the suspension is set to be soft, and at the same time, the gear ratio of the automatic transmission is controlled and the vehicle is decelerated to attain Vx. Thus, even when the initial vehicle speed is high, the vehicle decelerates before reaching the level change and the vehicle speed attains Vx when passing over the level change. Thus, the ride comfort does not deteriorate for the driver.

In addition, in the case in which the vehicle speed is equal to or less than Vy, the suspension is set to be firm, and in the case in which the vehicle speed is greater than Vy and less than Vx, the suspension is controlled so as to attain a vertical acceleration on the comfort demarcation line. Thus, it is possible to optimize the ride comfort and the travel stability in line with the preferences of the driver.

Furthermore, the level changes that the vehicle passes over during travel are learned, and level change information that includes the location of the level change, the size of the level change, and the like is accumulated. Thereby, it is possible to detect level changes on the road correctly.

Note that in the present embodiment, only the case in which the damping force of the suspension is controlled was explained. However, the present embodiment can be applied to the case in which the damping force of the suspension is not controlled. In this case, the characteristic value that indicates the relationship between the speed and the vertical acceleration of the vehicle varies on one straight line that is analogous to the straight lines 51 and 52, and does not vary in the band having the width represented by the straight lines 51 and 52 as shown in FIG. 7. In addition, in the case in which the characteristic value that varies along this straight line exceeds the comfort demarcation line 47, when the vehicle decelerates to the vehicle speed that corresponds to the intersection between this straight line and the comfort demarcation line 47 by carrying out deceleration control, the characteristic value remains within the comfort area 49 under the comfort demarcation line 47. Thus, the ride comfort does not deteriorate for the driver even when the damping force of the suspension is not controlled.

In addition, the present invention is not limited by the present embodiment described above, and various modifications may be carried out based on the objects of the present invention that are not excluded from the scope of the present invention.

**Claims**

1.   A vehicle control system, comprising:

> a memory device (20) that stores level change information about level changes on a road;
> a vehicle speed detecting device (32) that detects a speed of a vehicle; and
> a vehicle speed control device (14, 33) that calculates an estimated vertical acceleration based on the speed of the vehicle, which has been detected by the vehicle speed detecting device, and the level change information, and carries out deceleration control when the calculated estimated vertical acceleration is larger than a vertical acceleration of a critical value of comfort that corresponds to the speed of the vehicle that has been detected by the vehicle speed detecting device.

2.   The vehicle control system according to claim 1, wherein the critical value of comfort is shown as a comfort demarcation line that is set so as to divide on a map an area in which comfort is felt even when the vehicle passes over a level change and an area in which discomfort is felt when the vehicle passes over a level change, the coordinate axes of the map being the speed and the vertical acceleration of the vehicle.

3.   The vehicle control system according to claim 2, further comprising:

> a level change control device (13, 31) that carries out level change control based on the level change information about level changes that is stored in the memory device; and
> wherein the level change control device varies the control amount such that the characteristic value varies according to the comfort demarcation line.

4.   The vehicle control system according to claim 3, wherein the level change control device varies the control amount along the comfort demarcation line within a speed range in which an upper limiting value of a fluctuation band of the characteristic value is higher than the comfort demarcation line and a lower limiting value of the fluctuation band of the characteristic value is lower than the comfort demarcation line.

5.   The vehicle control system according to claim 4, wherein:

> the level change control device sets the control amount to the upper limiting value of the control band in a speed range in which the upper limiting value of the fluctuation band of the characteristic value is set equal to or less than the comfort demarcation line; and
> the level change control device sets the control amount to the lower limiting value of the control band in a speed range in which the lower limiting value of the fluctuation band of the characteristic value is equal to or greater than the comfort demarcation line.

6.   The vehicle control system according to any one of claims 2 to 5, wherein an area in which comfort is felt and an area in which discomfort is felt are areas that are set based on preferences of a user with respect to the thrust from a level change that the vehicle has passed over.

7.   The vehicle control system according to claim 4 or 5, wherein the vehicle speed control device carries out deceleration control in a speed range in which the lower limiting value of the fluctuation band of the characteristic value is set equal to or greater than the comfort demarcation line.

8. The vehicle control system according to any one of claims 1 to 7, wherein the vehicle speed control device carries out deceleration control by varying the gear ratio of an automatic transmission.

9. A vehicle control method, comprising the steps of:

storing level change information about level changes on a road in a memory device (20);
detecting a speed of a vehicle;
calculating an estimated vertical acceleration based on the speed of the vehicle and the level change information; and
carrying out deceleration control when the calculated estimated vertical acceleration is larger than a vertical acceleration of a critical value of comfort that corresponds to the speed of the vehicle.

**Patentansprüche**

1. Fahrzeugsteuerungssystem, enthaltend
eine Speichervorrichtung (20), die Niveauänderungsinformation über Niveauänderungen einer Strasse speichert;
eine Fahrzeuggeschwindigkeitsdetektionsvorrichtung (32), die eine Geschwindigkeit eines Fahrzeugs detektiert; und
eine Fahrzeuggeschwindigkeitssteuerungsvorrichtung (14, 33), die eine geschätzte vertikal Beschleunigung berechnet basierend auf der Geschwindigkeit des Fahrzeugs, die durch die Fahrzeuggeschwindigkeitsdetektionsvorrichtung detektiert worden ist, und der Niveauänderungsinformation, und die eine Verzögerungssteuerung durchführt, wenn die berechnete geschätzte vertikale Beschleunigung größer ist als eine vertikale Beschleunigung mit einem kritischen Komfortwerts, der der Geschwindigkeit des Fahrzeugs entspricht, die durch die Fahrzeuggeschwindigkeitsdetektionsvorrichtung detektiert worden ist.

2. Fahrzeugsteuerungssystem nach Anspruch 1, bei dem der kritische Komfortwert als eine Komfortgrenzlinie gezeigt ist, die derart gesetzt ist, dass sie eine Karte in einen Bereich unterteilt, in dem man Komfort fühlt, selbst wenn das Fahrzeug über eine Niveauänderung fährt, und in einen Bereich, in dem kein Komfort gefühlt wird, wenn das Fahrzeug über eine Niveauänderung fährt, wobei die Koordinatenachsen der Karte die Geschwindigkeit und die vertikale Beschleunigung des Fahrzeugs sind.

3. Fahrzeugsteuerungssystem nach Anspruch 2, ferner enthaltend
eine Niveauänderungssteuerungsvorrichtung (13, 31), die eine Niveauänderungssteuerung basierend auf der Niveauänderungsinformation über Niveauänderungen, die in der Speichervorrichtung gespeichert ist, durchführt; und
wobei
die Niveauänderungssteuerungsvorrichtung das Steuerungsausmaß derart ändert, dass der charakteristische Wert sich gemäß der Komfortgrenzlinie ändert.

4. Fahrzeugsteuerungssystem nach Anspruch 3, bei dem die Niveauänderungssteuerungsvorrichtung das Steuerungsausmaß entlang der Komfortgrenzlinie innerhalb eines Geschwindigkeitsbereichs ändert, in dem ein oberer Grenzwert eines Schwankungsbandes des charakteristischen Werts über der Komfortgrenzlinie ist, und ein unterer Grenzwert des Schwankungsbands des charakteristischen Werts unter der Komfortgrenzlinie ist.

5. Fahrzeugsteuerungssystem nach Anspruch 4, bei dem
die Niveauänderungssteuerungsvorrichtung das Steuerungsausmaß auf den oberen Grenzwert des Steuerungsbands in einem Geschwindigkeitsbereich setzt, bei dem der obere Grenzwert des Schwankungsbands des charakteristischen Werts gleich oder unter der Komfortgrenzlinie gesetzt ist; und
die Niveauänderungssteuerungsvorrichtung das Steuerungsausmaß auf den unteren Grenzwert des Steuerungsbands in einem Geschwindigkeitsbereich setzt, bei dem der untere Grenzwert des Schwankungsbands des charakteristischen Werts gleich oder über der Komfortgrenzlinie ist.

6. Fahrzeugsteuerungssystem nach einem der Ansprüche 2 bis 5, bei dem ein Bereich, in dem Komfort gefühlt wird, und ein Bereich, in dem kein Komfort gefühlt wird, Bereiche sind, die basierend auf Präferenzen eines Benutzers bezüglich des Stoßes aufgrund einer Niveauänderung, über die das Fahrzeug fährt, gesetzt sind.

7. Fahrzeugsteuerungssystem nach Anspruch 4 oder 5, bei dem die Fahrzeuggeschwindigkeitssteuerungsvorrichtung eine Verzögerungssteuerung in einem Geschwindigkeitsbereich durchführt, in dem der untere Grenzwert des Schwankungsbands des charakteristischen Werts gleich oder über der Komfortgrenzlinie gesetzt ist.

8. Fahrzeugsteuerungssystem nach einem der Ansprüche 1 bis 7, bei dem die Fahrzeuggeschwindigkeitssteuerungsvorrichtung eine Verzögerungssteuerung durchführt, indem die Getriebeübersetzung eines Automatikgetriebes verändert wird.

9. Fahrzeugsteuerungsverfahren mit den Schritten:

Speichern von Niveauänderungsinformation über Niveauänderungen einer Straße in einer Speichervorrichtung (29);
Detektieren einer Geschwindigkeit eines Fahrzeugs;
Berechnen einer geschätzten vertikalen Beschleunigung basierend auf der Geschwindigkeit des Fahrzeugs und der Niveauänderungsinformation; und
Durchführen einer Verzögerungssteuerung, wenn die berechnete geschätzte vertikale Beschleunigung größer ist als eine vertikale Beschleunigung mit einem kritischen Komfortwerts, der der Geschwindigkeit des Fahrzeugs entspricht.

**Revendications**

1. Système de commande de véhicule, comprenant :

un dispositif de mémoire (20) qui stocke des informations de changement de niveau sur les changements de niveau d'une route ;
un dispositif de détection de vitesse de véhicule (32) qui détecte la vitesse d'un véhicule ; et
un dispositif de commande de vitesse de véhicule (14, 33), qui calcule une accélération verticale estimée sur la base de la vitesse du véhicule, qui a été détectée par le dispositif de détection de vitesse de véhicule, et des informations de changement de niveau et effectue une commande de décélération lorsque l'accélération verticale estimée calculée est supérieure à une accélération verticale d'une valeur de confort critique qui correspond à la vitesse du véhicule qui a été détectée par le dispositif de détection de vitesse de véhicule.

2. Système de commande de véhicule selon la revendication 1, dans lequel la valeur de confort critique est présentée comme une ligne de démarcation de confort qui est réglée de manière à diviser sur une carte une région dans laquelle on ressent un certain confort, même lorsque le véhicule passe par un changement de niveau, et une région dans laquelle on ressent une gêne lorsque le véhicule passe par un changement de niveau, les axes de coordonnées de la carte étant la vitesse et l'accélération verticale du véhicule.

3. Système de commande de véhicule selon la revendication 2, comprenant en outre :

un dispositif de commande de changement de niveau (13, 31) qui effectue une commande de changement de niveau sur la base des informations de changement de niveau relatives à des changements de niveau, qui sont stockés dans le dispositif de mémoire ; et
dans lequel le dispositif de commande de changement de niveau modifie le degré de commande de sorte que la valeur caractéristique varie en fonction de la ligne de démarcation de confort.

4. Système de commande de véhicule selon la revendication 3, dans lequel le dispositif de commande de changement de niveau modifie le degré de commande le long de la ligne de démarcation de confort dans une plage de vitesses, dans laquelle une valeur limite supérieure d'une bande de fluctuation de la valeur caractéristique est au-dessus de la ligne de démarcation de confort et une valeur limite inférieure de la bande de fluctuation de la valeur caractéristique est en dessous de la ligne de démarcation de confort.

5. Système de commande de véhicule selon la revendication 4, dans lequel :

le dispositif de commande de changement de niveau règle le degré de commande à la valeur limite supérieure de la bande de commande dans une plage de vitesses dans laquelle la valeur limite supérieure de la bande de fluctuation de la valeur caractéristique est réglée égale ou inférieure à la ligne de démarcation de confort ; et
le dispositif de commande de changement de niveau règle le degré de commande à la valeur limite inférieure de la bande de commande dans une plage de vitesses dans laquelle la valeur limite inférieure de la bande de fluctuation de la valeur caractéristique est égale ou supérieure à la ligne de démarcation de confort.

6. Système de commande de véhicule selon l'une quelconque des revendications 2 à 5, dans lequel une région dans laquelle on ressent un certain confort et une région dans laquelle on ressent une certaine gêne sont des régions qui sont réglées sur la base de préférences d'un utilisateur par rapport à la poussée à partir d'un changement de niveau par lequel le véhicule est passé.

7. Système de commande de véhicule selon la revendication 4 ou 5, dans lequel le dispositif de commande de vitesse de véhicule effectue une commande de décélération dans une plage de vitesses dans laquelle la valeur limite inférieure de la bande de fluctuation de la valeur caractéristique est réglée égale ou supérieure à la ligne de démarcation de confort.

8. Système de commande de véhicule selon l'une quelconque des revendications 1 à 7, dans lequel le dispositif de commande de vitesse de véhicule effectue une commande de décélération en modifiant le rapport d'engrenage d'une transmission automatique.

9. Procédé de commande de véhicule, comprenant les étapes consistant à :

stocker des informations de changement de niveau sur les changements de niveau sur une route dans un dispositif de mémoire (20) ;
détecter une vitesse de véhicule ;
calculer une accélération verticale estimée sur la base de la vitesse du véhicule et des informations de changement de niveau ; et
effectuer une commande de décélération lorsque l'accélération verticale estimée calculée est supérieure à une accélération verticale d'une valeur de confort critique qui correspond à la vitesse du véhicule.

FIG. 1

30

VEHICLE DEVICES

31
SUSPENSION ECU

32
VEHICLE SPEED
DETECTING PORTION

33
VEHICLE SPEED
CHANGING PORTION

10

NAVIGATION APPARATUS

13
OPTIMAL DAMPING
FORCE CALCULATING
PORTION

TARGET
DECELERATION CAL-
CULATING PORTION
14

LEVEL CHANGE SIZE
CALCULATING PORTION
12

11
LOCATION
PORTION

20

LEVEL
CHANGE
LEARNING
DB
21

MAP DB
22

DRIVER
PREFERENCE
LEARNING
DB
23

FIG. 2

START

IS
THERE MATCHING
?
S1
NO

YES

HAS
A LEVEL CHANGE BEEN
DETECTED?
S2
NO

YES
S3

CALCULATE THE LEVEL CHANGE SIZE
FROM THE VEHICLE SPEED WHEN
PASSING OVER THE LEVEL CHANGE

S4

STORE THE CURRENT LOCATION AND
THE LEVEL CHANGE SIZE IN THE
LEVEL CHANGE LEARNING DB

END

FIG. 3

FIG. 4

FIG. 5

FIG. 6

FIG. 7

FIG. 8

FIG. 9

FIG. 10

FIG. 11

FIG. 12

FIG. 13

START

IS THERE MATCHING ? — S11 — NO

YES

ACQUIRE THE CURRENT LOCATION — S12

ACQUIRE THE LEVEL CHANGE LOCATION AND LEVEL CHANGE SIZE FROM THE LEVEL CHANGE LEARNING DB — S13

A LEVEL CHANGE THAT IS THE OBJECT OF CONTROL IS PRESENT IN THE FOWARD DIRECTION OF THE VEHICLE — S14 NO

YES

ACQUIRE THE VEHICLE SPEED — S15

CALCULATE THE ESTIMATED VERTICAL G AT THE CURRENT VEHICLE SPEED — S16

CALCULATE $V_x$ AND $V_y$ FROM THE CONTROL BAND OF THE SUSPENSION AT THE COMFORT DEMARCATION LINE AND THE LEVEL CHANGE THAT IS THE OBJECT OF CONTROL — S17

IS THE CURRENT VEHICLE SPEED EQUAL TO OR GREATER THAN $V_x$? — S18 — YES

NO

SET TO BE SOFT — S19

IS THE CURRENT VEHICLE SPEED EQUAL TO OR LESS THAN $V_y$? — S21

YES

NO

DECELERATION CONTROL WHERE $V_x$ IS SET AS THE TARGET VEHICLE SPEED — S20

SET TO BE FIRM — S22

CONTROL THE SUSPENSION SO AS TO ATTAIN THE VERTICAL G ON THE COMFORT DEMARCATION LINE — S23

END

FIG. 14

**EP 1 780 089 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2000318634 A
- US 6253143 B1
- US 6199001 B1